# FASCICULE DE BREVET EUROPEEN

(11) **EP 1 545 947 B1**
(45) Date de publication et mention de la délivrance du brevet: **27.02.2008**
(21) Numéro de dépôt: 03794998.9
(22) Date de dépôt: 08.09.2003
(51) Int. Cl.: B60S 1/40, B60S 1/38

(54) **AGENCEMENT DE FIXATION D'UN BALAI D'ESSUIE GLACE SUR UN BRAS**
ANORDNUNG ZUR BEFESTIGUNG EINES SCHEIBENWISCHERBLATTS AN EINEM WISCHERARM
ARRANGEMENT FOR FIXING A WINDSCREEN WIPER BLADE TO A WIPER ARM

(30) Priorité: 12.09.2002 FR 0211405
(43) Date de publication de la demande: 29.06.2005
(60) Demande divisionnaire: 07119017.7
(73) Titulaire: VALEO SYSTEMES D'ESSUYAGE, 78321 La Verrière (FR)
(72) Inventeur: VACHER, Pascal, F-63500 Issoire (FR)
(86) Numéro de dépôt international: PCT/EP2003/009950
(87) Numéro de publication internationale: WO 2004/024520

(56) Documents cités:
- DE-B- 1 058 382
- DE-B- 1 108 580
- FR-A- 2 070 567
- US-A- 3 550 180

## Description

La présente invention se rapporte à un agencement de fixation d'un balai d'essuie glace sur un bras.

Elle concerne plus précisément un agencement de fixation d'un balai d'essuie glace sur un bras, ce balai comportant un axe de pivotement transversal destiné à la liaison pivotante avec le bras.

De façon connue, un tel balai est adaptée à un type de bras spécifique dit à chape car comportant une extrémité en profilé en U en tôle d'acier réalisé par roulage autour du bras. Selon un mode de réalisation connu, une pièce indépendante dite adaptateur est montée sur le balai, cet adaptateur étant pourvu d'orifices en vis à vis sur ses ailes et destinés à s'encliqueter sur l'axe et l'extrémité du bras en U est emboîtée et bloquée sur cet adaptateur, l'ouverture du U étant dirigée vers le balai. Or ces bras à chape sont complexes et onéreux, quant à leur fabrication.

Pour résoudre ce problème et permettre le montage de bras de conception particulièrement simple que sont les bras à tige d'extrémité, le document US,A,3,550,180 propose un agencement de fixation d'un balai d'essuie glace sur un bras, ledit balai comportant un axe de pivotement transversal traversant destiné à la liaison pivotante avec le bras et le bras comportant une tige d'extrémité, caractérisé en ce qu'il comporte une pièce indépendante dite adaptateur montée sur le balai et dans laquelle est enfichée longitudinalement la tige.

Dans ce document, l'adaptateur est de section en U dont les ailes comporte chacune un orifice d'encliquetage sur le l'axe et dont une extrémité dite extrémité d'entrée est ouverte et l'adaptateur comporte des moyens de blocage transversal et longitudinal du bras.

Selon l'invention l'âme de l'adaptateur est pourvue d'une ouverture longitudinale permettant le passage de la tige lors de son enfichage.

Avantageusement, un moyen de blocage longitudinal est constitué d'une partie articulée pourvue d'un tenon venant s'emboîter dans un orifice agencé sur la tige, lorsque celle-ci est enfichée.

Dans ce cas, de préférence, ce moyen de blocage est constitué d'une traverse articulée sur l'adaptateur par au moins une languette flexible, portant le tenon et formant avec l'âme de l'adaptateur à son extrémité d'entrée un canal de positionnement de la tige.

Avantageusement, un autre moyen de blocage longitudinal est constitué d'un logement agencé sur l'adaptateur dans lequel vient en prise une butée de la tige, lorsque celle-ci est enfichée.

Dans ce cas, de préférence, ledit logement est agencé sur l'âme de l'adaptateur à proximité de son extrémité opposée à celle d'entrée et ladite butée est agencée à l'extrémité de la tige.

Le logement peut être conformé grâce à une nervure d'encliquetage profilée sur la surface interne de l'adaptateur et la butée peut être un cliquet profilé à l'extrémité de la tige.

De plus, de préférence, l'adaptateur comporte au moins une traverse fixe de blocage transversal de la tige.

L'invention est décrite ci-après plus en détail à l'aide de figures ne représentant d'un mode de réalisation préféré de l'invention.
La figure 1 est une vue en perspective de l'agencement de fixation conforme à l'invention.
La figure 2 est une vue analogue en perspective en coupe longitudinale.
La figure 3 est une vue en coupe longitudinale de l'agencement de fixation conforme à l'invention.
Les figures 4 à 6 sont des vues de face illustrant l'enfichage de la tige du bras.

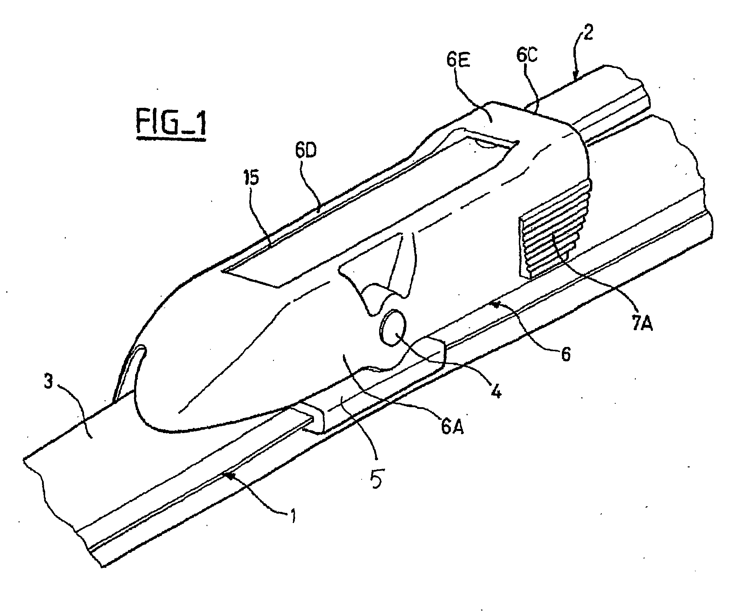

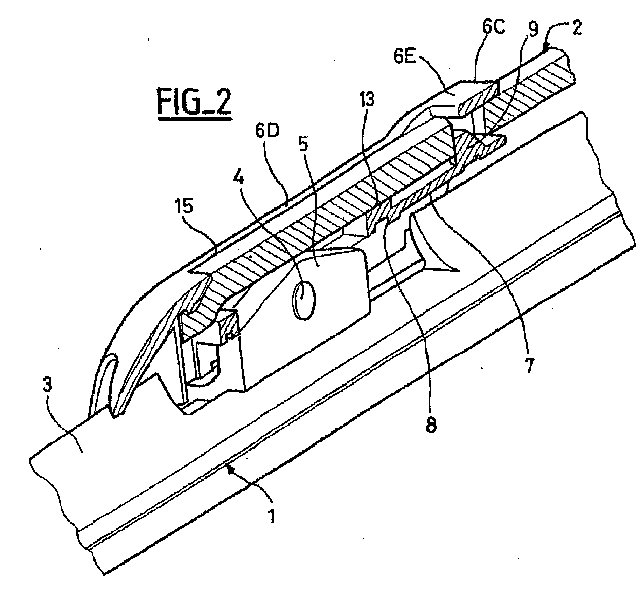

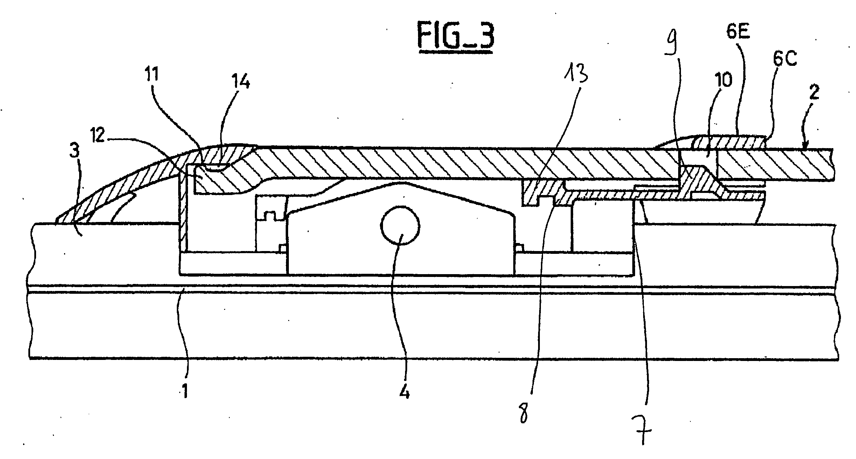

L'agencement de fixation selon l'invention est représentée sur les figures 1 à 3.

Sur un balai (1,3,5,4) est monté un bras 2. Ce bras 2 lié de façon connue à un entraînement de rotation permet le déplacement du balai sur la vitre d'un véhicule automobile, en particulier. Ce balai (1,3,5,4) est d'un type connu et comporte un axe de pivotement transversal traversant 4 fixé à une pièce 5 solidaire des pièces 1 et 3 constituées de la lame d'essuyage et de sa vertèbre de renforcement. Un tel balai est de façon connue destinée à recevoir une pièce indépendante dite adaptateur sur laquelle est emboîtée un bras à chape.

L'invention permet de monter un bras d'extrémité en tige par enfichage dans un adaptateur 6.

Pour ce faire, l'adaptateur 6 en matière plastique est une pièce de section en U dont les ailes 6A, 6B comportent chacune un orifice d'encliquetage sur l'axe 4 et dont une extrémité 6C dite extrémité d'entrée est ouverte. Cette extrémité d'entrée 6C est destinée à recevoir la tige d'extrémité du bras 2.

L'adaptateur 6 comporte également des moyens de blocage transversal et longitudinal du bras enfiché.

Un premier moyen de blocage longitudinal est constitué d'une partie articulée constituée d'une traverse 7 articulée sur l'adaptateur par au moins une languette flexible 8 et portant un tenon 9. Comme il sera décrit plus loin plus précisément, ce tenon 9 vient s'emboîter dans un orifice 10 agencé sur la tige 2, lorsque celle-ci est enfichée. Cette traverse 7 forme avec l'âme 6D de l'adaptateur à son extrémité d'entrée 6C un canal de positionnement de la tige.

Un deuxième moyen de blocage longitudinal est constitué d'un logement 11 agencé sur la surface interne de l'âme 6D de l'adaptateur et dans lequel vient en prise une butée 12 de la tige, lorsque celle-ci est enfichée. Ce logement 11 est agencé à proximité de l'extrémité opposée à celle d'entrée 6C et cette butée 12 est agencée à l'extrémité de la tige du bras 2. Avantageusement, ce logement 11 est conformé grâce à une nervure d'encliquetage profilée 14 et cette butée 12 est un cliquet profilé à l'extrémité de la tige.

L'adaptateur comporte également au moins une traverse fixe 13 de blocage transversal de la tige. Cette traverse 13 est agencée à un emplacement libre entre les deux extrémités de l'adaptateur, compte tenu de l'encombrement de la pièce 5 support de l'axe 4.

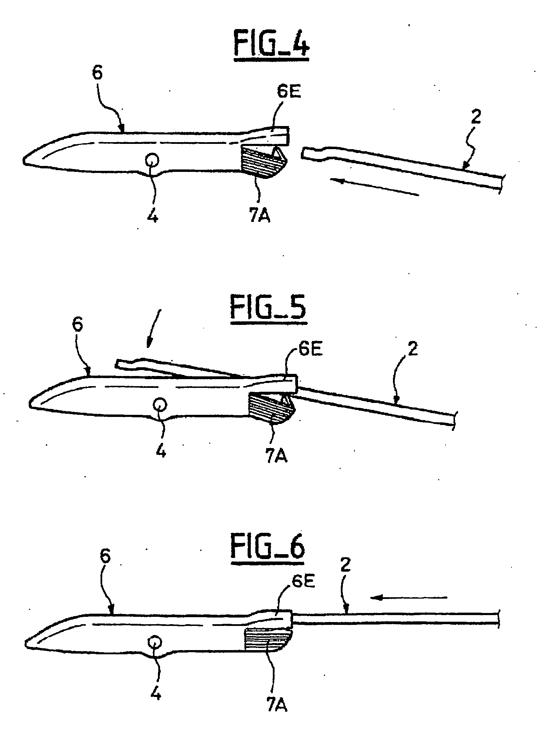

L'âme 6D de l'adaptateur est pourvue d'une ouverture longitudinale 15 permettant le passage et la mise en place de la tige lors de son enfichage comme il va être maintenant décrit en référence aux figures 4 à 6.

L'adaptateur 6 est monté sur le bras 2 après son encliquetage sur l'axe 4. Pour ce faire, comme représenté sur la figure 4, le canal de positionnement formé par la traverse 7 et l'âme 6D de l'adaptateur est ouvert par déplacement de la traverse 7 vers le bas (vu selon la figure) grâce à la déformation élastique de la languette 8. Pour aider à cette manipulation, les flancs de la traverse 7 sont pourvus de nervures de préhension 7A.

Son extrémité inclinée vers le haut (vu selon la figure), l'extrémité de la tige du bras 2 est introduite dans ce canal sur une certaine longueur et passe dans l'ouverture longitudinale 15. Ainsi la tige est enfichée aisément au-dessus de la traverse fixe 13. Lorsque l'extrémité de la tige est à proximité de l'extrémité de l'ouverture 15 opposée à l'ouverture d'entrée 6C, comme représenté sur la figure 5, la tige est rabattue vers l'intérieur de l'adaptateur.

Il suffit ensuite de la pousser longitudinalement, comme représenté sur la figure 6, pour venir encliqueter sa butée 12 dans le logement 11 de l'adaptateur.

Avantageusement, la tige du bras 2 et l'adaptateur 6 sont profilés pour que la tige enfichée affleure la surface extérieure de l'âme 6D au niveau de l'ouverture longitudinale 15 de l'âme 6D de l'adaptateur, ceci dans un souci d'aérodynamique, d'esthétique et d'encombrement. La tige est donc non rectiligne, de forme inclinée à son extrémité afin de venir se loger sous l'âme 6D de l'adaptateur. L'adaptateur quant à lui est surélevé à proximité de son ouverture d'entrée 6C où il forme un pont 6E entre l'ouverture d'entrée 6C et l'ouverture longitudinale 15.

## Revendications

1. Agencement de fixation d'un balai (1,3,5,4) d'essuie glace sur un bras (2), ledit balai (1,3,5,4) comportant :
- un axe de pivotement transversal traversant destiné à la liaison pivotante avec ledit bras et ledit bras (2) comportant une tige d'extrémité, l'agencement comportant
- une pièce indépendante dite adaptateur (6) montée sur ledit balai (1,3,5,4) et dans laquelle est enfichée longitudinalement ladite tige,
ledit adaptateur (6) étant de section sensiblement en U dont les ailes (6A, 6B) comporte chacune un orifice d'encliquetage sur ledit axe (4) et dont une extrémité dite extrémité d'entrée (6C), destinée à recevoir ladite tige, est ouverte et en ce que ledit adaptateur (6) comporte des moyens de blocage transversal et longitudinal dudit bras (2), **caractérisé en ce que** l'âme (6D) de l'adaptateur est pourvue d'une ouverture longitudinale (15) permettant le passage de la tige lors de son enfichage.

2. Agencement selon la revendication 1, **caractérisé en ce qu'**un moyen de blocage longitudinal est constitué d'une partie articulée pourvue d'un tenon (9) venant s'emboîter dans un orifice (10) agencé sur la tige, lorsque celle-ci est enfichée.

3. Agencement selon la revendication 2, **caractérisé en ce que** ce moyen de blocage est constitué d'une traverse (7) articulée sur l'adaptateur par au moins une languette flexible (8), portant ledit tenon (9) et formant avec l'âme (6D) de l'adaptateur à son extrémité d'entrée (6C) un canal de positionnement de la tige.

4. Agencement selon l'une des revendications 1 à 3, **caractérisé en ce qu'**un moyen de blocage longitudinal est constitué d'un logement (11) agencé sur l'adaptateur dans lequel vient en prise une butée (12) de la tige, lorsque celle-ci est enfichée.

5. Agencement selon la revendication 4, **caractérisé en ce que** ledit logement (11) est agencé sur l'âme (6C) de l'adaptateur à proximité de son extrémité opposée à celle d'entrée (6C) et ladite butée (12) est agencée à l'extrémité de la tige.

6. Agencement selon la revendication 5, **caractérisé en ce que** ledit logement (11) est conformé grâce à une nervure d'encliquetage profilée (14) sur la surface interne de l'adaptateur et ladite butée (12) est un cliquet profilé à l'extrémité de la tige.

7. Agencement selon l'une des revendications 1 à 6, **caractérisé en ce que** l'adaptateur (6) comporte au moins une traverse fixe (13) de blocage transversal de la tige.

## Claims

1. An arrangement for fixing a wiper blade (1, 3, 5, 4) on an arm (2), said wiper blade (1, 3, 5, 4) including:
- a transversal swivel through shaft, intended for the swivelling connection with said arm, and said arm (2) including an end stem, the arrangement including
- an independent part, a so-called adaptor (6), mounted on said wiper blade (1, 3, 5, 4) and wherein said stem is longitudinally fitted,
said adaptor (6) having a substantially U-shaped section, the wings (6A,6B) of which include, each, a detent hole provided on said axis (4) and an end of which, a so-called lead end (6C), intended for receiving said stem, is open and said adaptor (6) including means for the transversal and longitudinal locking of said arm (2), **characterized in that** the web (6D) of the adaptor is provided with a longitudinal aperture (15) allowing the passage of the stem, when it is fitted.

2. An arrangement according to claim 1, **characterized in that** a longitudinal locking means is constituted of a hinged part provided with a pin (9) nested in a hole (10) arranged on the stem, when the latter is fitted.

3. An arrangement according to claim 2, **characterized in that** such locking means is constituted of a crosspiece (7) hinged on the adaptor by at least a flexible tab (8), supporting said pin (9) and forming a stem positioning channel with the web (6D) of the adaptor, at its lead end (6C).

4. An arrangement according to one of claims 1 to 3, **characterized in that** the longitudinal locking means is constituted of a housing (11) arranged on the adaptor, wherein a stop (12) of the stem is engaged, when the latter is fitted.

5. An arrangement according to claim 4, **characterized in that** said housing (11) is arranged on the web (6D) of the adaptor, close to its end opposite the lead one (6C), and said stop (12) is arranged at the end of the stem.

6. An arrangement according to claim 5, **characterized in that** said housing (11) is shaped thanks to a profiled detent rib (14) on the inner surface of the adaptor and said stop (12) is a profiled pawl at the end of the stem.

7. An arrangement according to one of claims 1 to 6, **characterized in that** the adaptor (6) includes at least a fixed crosspiece (13) for transversally blocking the stem.

## Patentansprüche

1. Anordnung für die Befestigung eines Scheibenwischerblatts (1, 3, 5, 4) an einem Wischerarm(2), wobei das besagte Scheibenwischerblatt (1, 3, 5, 4) folgende Teile umfaßt:
- Eine durchquerende Querschwenkachse, die für die Schwenkverbindung mit dem besagten Wischerarm bestimmt ist, und wobei der besagte Wischerarm (2) eine Endstange umfaßt, wobei die Anordnung folgende Teile umfaßt:
- Ein unabhängiges Teil, der sogenannte Adapter (6), das auf das besagte Scheibenwischerblatt (1, 3, 5, 4) montiert ist, und in dem die besagte Stange der Länge nach eingesteckt ist, wobei der besagte Adapter (6) mit einem Durchschnitt in deutlicher U-Form, dessen Flügel (6A, 6B) jeweils eine Einrastöffnung auf der besagten Achse (4) umfassen, und von der ein Ende, das sogenannte Eingangsende (6C), das die besagte Stange aufnehmen soll, geöffnet ist, und daß der besagte Adapter (6) Mittel für die Quer- und Längssperrung des besagten Wischerarms (2) umfaßt, **dadurch gekennzeichnet, daß** der Kern (6D) des Adapters mit einer Längsöffnung (15) versehen ist, die den Durchgang der Stange bei ihrem Einstecken zuläßt.

2. Anordnung nach Anspruch 1, **dadurch gekennzeichnet, daß** ein Mittel zur Längssperrung aus einem gelenkigen Teil gebildet wird, das mit einem Zapfen (9) versehen ist, der in eine Öffnung (10) eintritt, die auf dem Stab gestaltet ist, wenn dieser eingesteckt ist.

3. Anordnung nach Anspruch 2, **dadurch gekennzeichnet, daß** dieses Sperrmittel aus einer Traverse (7) besteht, die gelenkig auf dem Adapter mit mindestens einer flexiblen Zunge (8) befestigt ist, die den besagten Zapfen (9) trägt und mit dem Kern (6D) des Adapters an seinem Eingangsende (6C) einen Kanal zur Positionierung des Stabs bildet.

4. Anordnung nach einem beliebigen der vorstehenden Ansprüche 1 bis 3, **dadurch gekennzeichnet, daß** ein Mittel zur Längssperrung aus einer auf dem Adapter gestalteten Aufnahme (11) besteht, in die ein Anschlag (12) des Stabs eingreift, wenn dieser eingesteckt ist.

5. Anordnung nach Anspruch 4, **dadurch gekennzeichnet, daß** die besagte Aufnahme (11) auf dem Kern (6D) des Adapters in der Nähe seines Endes entgegengesetzt zu demjenigen des Eingangs (6C) gestaltet ist, und daß der besagte Anschlag (12) am Ende des Stabs gestaltet ist.

6. Anordnung nach Anspruch 5, **dadurch gekennzeichnet, daß** die besagte Aufnahme (11) durch eine Einrastrippe mit Profil (14) auf der Innenfläche des Adapters abgestimmt ist, und der besagte Anschlag (12) ist eine am Ende der Stange profilierte Raste.

7. Anordnung nach einem beliebigen der vorstehenden Ansprüche 1 bis 6, **dadurch gekennzeichnet, daß** der Adapter (6) zumindest eine feststehende Traverse (13) zur querwirkenden Sperrung des Stabs umfaßt.
